# EUROPEAN PATENT APPLICATION

(11) **EP 3 855 017 A1**
(43) Date of publication of application: **28.07.2021**
(21) Application number: 21162846.6
(22) Date of filing: 28.11.2017
(51) Int. Cl.: F03D 13/10, F03D 13/20, E04B 1/98, F03D 7/02, E04H 12/08

(54) **BUILDING STRUCTURE COMPRISING A VORTEX GENERATOR TO REDUCE INDUCED VIBRATIONS**

(30) Priority: 15.02.2017 DE 102017202432
(62) Divisional of application: 17816533.8
(71) Applicant: Siemens Gamesa Renewable Energy A/S, 7330 Brande (DK)
(72) Inventor: Enevoldsen, Peder Bay, 7100 Vejle (DK); Gonzalez, Alejandro Gomez, 8000 Aarhus (DK); Loeven, Alex, 7400 Herning (DK); Stam, Cornelis Jan, Boulder, CO 80304 (US)
(74) Representative: Aspacher, Karl-Georg

(57) **Abstract**

The invention relates to an arrangement to reduce vortex induced vibrations in a tower of a wind turbine.

A tower of a wind turbine is disclosed, comprising an outer surface, whereby a vortex generator is connected to the outer surface of the tower.

The vortex generator is prepared and arranged in a way to generate vortices in an airstream passing by the outer surface.

## Description

The invention relates to an arrangement to reduce vortex induced vibrations in a tower of a wind turbine.

For high buildings, such as towers, the wind interacts with the building. The wind blows past the building. At the end of the building, when the moving air leaves the building, a vortex is generated. The vortex in the wake of the building leads to a varying pressure of the air at the surface of the building. This leads to a varying load at the building.

It is known that vortex streets can develop in the wake of a building. The vortices develop in the wake of the building and are shaded with a certain frequency. This leads to loads at the building that are changing with a certain frequency. Thus, vibrations are induced in the building. The vibrations induced might have a frequency that comes close to, or is identical with, the eigen-frequency of the building. In such cases the building starts to resonate and the loads in the building structure are very high.

Resonances in buildings need to be avoided, thus the vortex streets and their effect needs to be reduced or suppressed.

For buildings with a round shape, like chimneys of towers, it is known to attach strakes to the surface of the building. The strakes disturb the laminar flow of the air along the surface of the building, and thus reduce the development of vortex streets.

Strakes are used for permanent installations or for non-permanent use such as during transportation or installation of the whole, or parts of, the tower or chimney.

Strakes add to the material of the building in terms of weight and costs. In addition, strakes have an additional aerodynamic effect that is unwanted, and needs to be handled.

The aim of the invention is therefore to provide an improved arrangement and method to reduce the effect of vortices on high and slim buildings, such as wind turbine towers.

The object of the invention is achieved by the independent claim 1. Further features of the invention are disclosed in the dependent claims.

A building structure is disclosed, comprising an outer surface, whereby a vortex generator is connected to the outer surface of the building structure. The vortex generator is prepared and arranged in a way to generate vortices in an airstream passing by the outer surface.

An airstream, thus a wind, passing by the outer surface of a building structure interacts with the building structure. In the wake of the building structure the airstream leaves the surface of the building structure and thus, builds a vortex street in the wake of the building.

The interruption of the airstream leading along the building surface and the creation of vortices in the wake of the building structure leads to varying loads on the building structure and thus, can lead to vibrations of the building. Vibrations of the building are unwanted as the building has to take in higher loads.

Vortex generators are attached to the outer surface of the building structure. Vortex generators interact with the wind passing by the building and equalize the energy present in the airstream close to the outer surface of the building structure.

Thus, the airstream follows the outer surface of the building structure for a longer distance along the outer surface, which leads to the creation of smaller vortices in the wake of the building. Thus, the creation of vortices is reduced and also the loads and forces acting of the building are reduced.

The building structure can be a tall, slim building or a chimney, for example, or a tower, or a part or segment of a building, a chimney or a tower.

The building structure can have a cross section that is circular or polygonal.

The building can be a concrete building, a building structure made of steel or a hybrid building structure.

The load of the wind at the building structure is highest, when the building structure is in an upright orientation. This can be the case when the building structure is installed, of when the building structure, as a whole or parts of it, gets transported.

Transportation can be done in an upright position, for example, for towers of wind turbines for an offshore installation. The tower, or parts of the tower, is mounted in an upright position on a vessel and is sailed to the installation site. The tower or tower segment is then hoisted by a crane onto the foundation. During the crane lift, the tower or tower segment is also subject to wind loads that are minimized by vortex generators.

In an embodiment the vortex generator comprises a plurality of fins, that are arranges in a row.

The vortex generator comprises a plurality of fins, whereby several of the fins are arranged in parallel.

The fins interact with the wind passing along the outer surface of the building structure. The fins form small vortices in their wake leading along the outer surface of the building structure. The energy present in the layers of air passing along the outer surface of the wind is equalized by the vortices created by the fins.

The air flowing along the outer surface flows along the surface in a laminar flow. The layers of wind closest to the outer surface of the building structure are reduced in speed by interaction with the surface of the building structure.

Thus, energy is taken out of the lower layers of the airflow passing along the building structure. When the airstream comes closer to the wake of the building structure, this leads to an interruption in the contact between the airstream and the building structure. Thus, the airstream leaves the building structure and forms a vortex street in the wake of the building structure.

Due to the fins of the vortex generator, the inner layers of the airstream are mixed and the difference in the velocity of the layers of airstream close to the outer surface of the building structure is reduced. Coming into the wake of the building structure, the airstream can follow the outer surface of the building structure for a longer time. When the airstream finally leaves the outer surface of the building structure it forms smaller vortices with a lower energy variation in the air and thus, the building structure experiences less variation in loads and thus, fewer vibrations.

In an embodiment the fins comprise a tip with a maximum elevation vertical to the outer surface, and a rim adjacent to the tip, that comprises a decreasing elevation vertical to the outer surface.

The fin comprises certain heights measured from the outer surface of the building structure towards a tip of the fin. The fin comprises a rim which is located adjacent to the tip, whereby the rim shows a decreasing elevation in respect to the outer surface of the building structure.

Thus, at least the part of the fin is triangular shaped, although, the fin might have additional edges and rims.

The best effect of a fin is created when the elevation of the fin at the end that the wind sees first, is smaller, and is increasing along the length of the fin towards the end of the fin.

The fin itself can rise mainly vertical from the outer surface of the building structure or it can be tilted to a certain degree in respect to the vertical direction measured from the outer surface.

Thus, the fin is optimized in its shape to interact with the wind and to form a little vortex leading along the outer surface of the building structure in the wind.

The fins might have a height of come millimeters or some centimeters, for example.

In an embodiment the fins are oriented in the angle of up to 60 degrees from the horizontal direction. The horizontal direction is determined when the building structure is in an installed state.

The building structure can be a tall, slim building, a chimney or a tower, for example.

Parts of the building structure are transported to the installation side by a vehicle, whereby the parts of the building structure may be oriented with the longitudinal axis horizontally. At the installation side, the parts of the building structure are installed, whereby the parts of the building structure get their final orientation.

In the case of a chimney or a tower, the longitudinal axis of the parts of the building structure is oriented vertically. The horizontal direction in respect to the fins is defined at the building in an installed state.

Thus, in the case of parts of a building structure of a chimney or a tower, the horizontal direction is vertical to the longitudinal axis of the part of the building structure.

The fins that build the vortex generators are oriented in an angle of up to 60 degrees deviating from the horizontal direction.

Looking at the fin and seen from left to right, the deviation from the horizontal direction can go upwards or downwards.

The deviation from the horizontal direction leads to a different result of the interaction with the wind blowing along the surface of the building structure. The deviation from the horizontal direction leads to an improved creation of a vortex along the surface of the building structure in the wake of the fin.

Thus, the generation of little vortices is improved.

In an embodiment at least two neighboring fins of a row, are angled in respect to the horizontal orientation in an alternating way, so that the at least two fins converge at one of their ends.

The orientation of the fins deviates from the horizontal direction. Looking vertical to the fin and seen from left to right, a fin might deviate from the horizontal direction upwardly or downwardly.

Two neighboring fins deviate from the horizontal direction in an alternating way. Thus, one fin deviates from the horizontal direction in an upward direction and the neighboring fin deviates from the horizontal direction in a downward direction, for example.

Thus, seen from left to right, two neighboring fins are connected to the surface of the building structure at a certain distance, whereby the distance can decrease towards the right end or it can increase towards the right end.

Thus, two neighboring fins show at least the part of the shape of a lying V.

The influence of two neighboring fins on the wind, blowing along the surface of the building structure, interacts.

Thus, neighboring fins work together to create little vortices that lead along the outer surface of the building structure. Thus, two neighboring fins that are angled in respect to the horizontal direction in an alternating way, lead to an optimized creation of little vortices in their wake, to level out the energy in the wind blowing along the outer surface of the building structure. This leads to a minimization the creation of vortex streets in the wake of the building structure.

In an embodiment the row of the fins is arranged mainly in a vertical direction along the length of the building structure. The vertical direction of the building structure is determined when the building structure is oriented as installed.

The row of fins building the vortex generator is oriented in a vertical direction along the length of the building structure.

Thus, the row of fins is arranged in parallel to the longitudinal axis of the building structure.

As the wind in most cases blows horizontally, the interaction with the fins of the vortex generators is maximized in thus, the effect of the vortex generators is optimized.

In an embodiment at least two rows of fins are arranged along the outer surface of the building structure.

Two rows of fins can be arranged at the outer surface of the building structure with an offset in the longitudinal direction of the building structure, thus, with an vertical offset, or positioned along the circumference of the outer surface, thus showing horizontal offset.

Thus, the interaction with the wind can be increased and the effect of the vortex generators can be optimized.

In an embodiment the at least two rows of fins are arranged at a different position along a circumference of the outer surface of the building structure.

At least two rows of fins are arranged at the building structure at different locations along a circumference of the outer surface.

Thus, the vortex generator can interact with the wind coming from different wind directions.

Or, seen from a main wind direction a vortex generator can be attached to each side of the building structure, for example right and left of the building structure seen from the direction of the wind.

Thus, the vortex generators can interact best with the wind.

In an embodiment, the rows of fins are arranged mainly at positions which are spaced 30 degrees, 60 degrees, 90 degrees or 120 degrees measured along the circumference of the outer surface of the building structure.

The rows of fins can be spaced along the outer surface of the building structure with an offset of 30 degrees, 60 degrees, 90 degrees or 120 degrees measured along the circumference.

Thus, with rows of fins that are spaced apart 60 degrees measured along the circumference, six rows of fins are needed to cover the circumference of the building structure with fins.

A wind blowing along the outer surface of the building structure blows along the surface for a certain length measured along the circumference of the building structure.

The length covered by the wind can be 90 degrees measured along the circumference or even more.

Thus, rows of fins that are spaced apart 60 degrees measured along the circumference arranged in a way that at least one row of fin can interact with the wind blowing along the surface. Also, with an offset of 90 degrees measured along the circumference at least one row of fin can interact with the wind.

When the rows of fins are spaced 120 degrease measured along the circumference of the outer surface, at least on one side of the building structure a row of fins can interact with the wind. The wind needs at least one row of fins arranged at one of the sides of the building structure. The one row of fins interacts with the wind creates little vortices leading along the outer surface of the building structure and influences the creation of vortex streets in the wake of the building structure.

The interaction of a vortex generator at one side of the building structure already reduces the creation of vortex streets in the wake of the building structure to a measurable effect. Thus, the number of rows of fins used as vortex generators can be optimized.

With the rows of fins spaced 30 degrees apart, the wind blowing along the surface of the building structure, experiences at least two or more rows of fins. The rows of fins interact with the air flow close to the outer surface. With a row of fins every 30 degrees the airflow gets influenced by the vortex generators several times, which increases the positive effect of the vortex generators on the creation of a vortex street in the wake of the tower. In addition, independent from the wind direction, with a row of fins every 30 degrees, the wind will always face enough vortex generators to be evenly influenced.

In an embodiment the row of fins is connected to a common base and the base is connected with the outer surface of the building structure.

The fins are arranged on a common base, so that a row of fins builds a stripe which is then connected to the outer surface of the building structure. Thus, the installation of the fins at the building structure can be optimized

In an embodiment a section of the upper part of the building structure is equipped with vortex generators, whereby at least 10 percent of the length of the building structure is equipped with vortex generators.

For the creation of vortex streets in the wake of the building structure, the upper part of a tall building is the most critical part. Thus, the vortex generators are connected to the building structure in the upper part.

At least 10 percent of the length of the building structure are equipped with vortex generators. Thus, the creation of vortex streets at an upper 10 percent of a building structure is minimized.

Also more than 10 percent of the length of the building structure can be equipped with vortex generators whereby the effect of the vortex generators on the vortex streets in the wake of the building is maximized, but also the number of fins needed for the vortex generators is increased.

For example, mainly the uppermost 20 percent of the outer surface of the building structure are equipped with vortex generators. The upper 20 percent of the most important part of the building structure in respect to wind loads due to vortex streets in the wake of the building structure. Thus, the effect can be optimized by at the same time limit the number of vortex generators needed to equip the building structure.

This is especially advantageous at wind turbines towers, for example.

In an embodiment at least 30 percent of the length of the building structure is equipped with vortex generators. The rows of fins lead along the upper most 30 percent or more of the length of the building structure. The interaction of the wind with the building structure is most critical in the upper part of the building.
At least 30 percent and thus, almost a third of the height of the building structure is equipped with vortex generators. Thus, the most critical part of the building structure is equipped with fins that minimize the creation of vortex streets in the wake of the building structure.

In an embodiment the outer surface of the building structure comprises a flap that is angled mainly vertical to the outer surface and leads along at least a part of the length of the building structure.

A flap is an arrangement to disturb the air flow along the outer surface of the building structure. This can be a strip of material with a certain elevation measured from the outer surface of the building structure.

The rows of fins can be combined with flaps mounted to the outer surface of the building structure. The rows of fins and the flaps can be mounted to the surface at a certain distance measured in circumferential direction.

The rows of fins and the flaps can be arranged in the way that the wind blowing towards the building structure sees a row of fins on one side of the building structure and a flap at the other side of the building structure.

Thus, a different effect in wind flow close to the surface of the building structure at the right and the left side of the building structure can be affected. Flaps disturb the air flow along the outer surface of the building structure in a way that vortices are created that force the laminar air flow away from the outer surface. A vortex street is created, as it would develop in the wake of the building structure, but the vortices are smaller, thus occur with a different frequency, and comprise less energy.

Flaps are easier to manufacture than rows of fins. Also the installation at the outer surface of the building structure can be easier. Flaps are also independent in respect to the direction where they face the wind from.

In combination with rows of fins the flaps can create a positive effect on the reduction of the creation of vortex streets in the wake of the building structure.

In an embodiment the building structure is a chimney or a tower.

A chimney or a tower is a tall and slim building structure. Chimneys or towers can be manufactured with a circular shape in the cross-cut, or a polygonal shape. Thus, they can show areas with a flat surface, and edges, or a rounded surface.

As chimneys or towers are very high compared to their width, the interaction with the wind, especially a creation of vortex streets in the wake of the chimney or the tower, can lead to high loads in the wall of the chimney or the tower, or even to vibrations in the building.

When the frequency of the creation of the vortices in the wake of the chimney or the tower comes close to the eigen-frequency of the building structure, the building structure, thus, the chimney or the tower, can come into resonance. This can be critical for the stability of the building structure. Thus, it is very advantageous to equip a building structure, like a chimney or a tower, with vortex generators, to minimize the creation of the vortex street in the wake of the building structure.

According to the invention, the tower is a tower of a wind turbine.

The tower of a wind turbine carries a nacelle and a rotor.

Thus, the tower of a wind turbine carries a high tower head mass. Compared to a chimney, vibrations in the building structure of the tower of a wind turbine, are even more critical.

The vibrational pattern of a wind turbine tower differs from the vibrational pattern of a chimney or tall, slim building.

In addition, the installation is present in the nacelle of the wind turbine can react critically to the vibrations or even to resonance of the tower. Thus, it is advantageous to equip the tower of a wind turbine with a vortex generator that reduces the creation of vortex streets in the wake of the wind turbine tower.

The invention is shown in more detail by the help of figures. The figures show a preferred configuration and do not limit the scope of the invention.
- FIG 1: shows vortex generators at a building structure,
- FIG 2: shows a detailed view of the vortex generators,
- FIG 3: A shows a flap at the building structure,

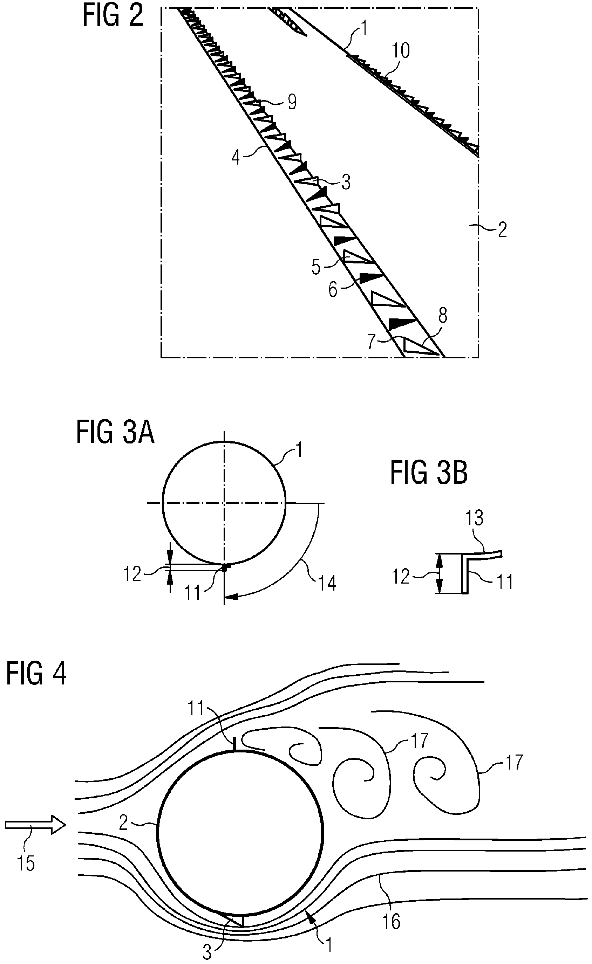

- FIG 3: B shows a detailed view of a flap,
- FIG 4: shows the effect of a vortex generator and a flap.

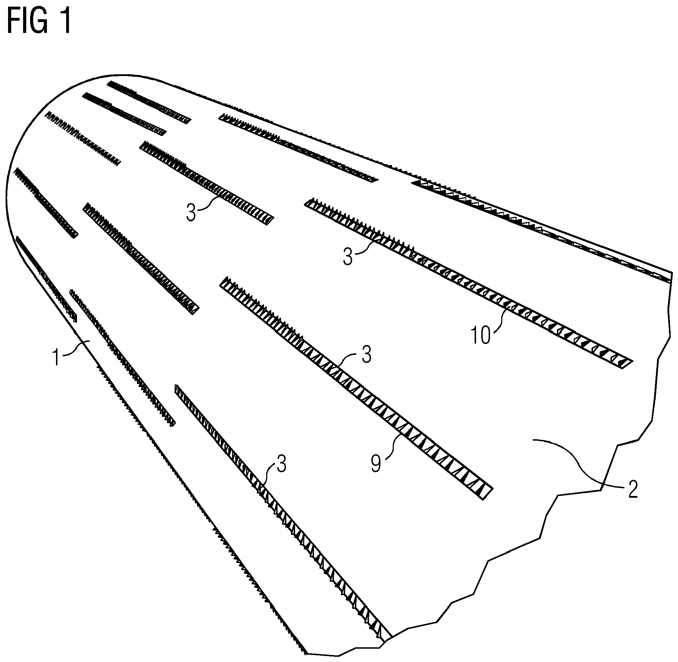

Figure 1 shows vortex generators at a building structure.

Figure 1 shows a building structure 1 with an outer surface 2. Vortex generators 9 and 10 are attached to the outer surface 2 of the building structure 1.

The vortex generators 3 are arranged in rows 9, 10 that are oriented mainly along the longitudinal direction of the building structure 1.

In figure 1 the building structure 1 is a tubular chimney or tower.

When the section of the tubular chimney or tower displayed in figure 1 is in an installed and upright direction, the rows of fins 9, 10 are oriented along the outer surface 2 of the building structure 1 in a mainly vertical direction.

The rows of fins 9, 10 are spaced apart from each other along the outer surface 2 of the building structure 1 by a certain angle measured along the circumference of the outer surface 2 of the building structure 1. The angle between two rows 9, 10 of fins is 30 degrees, for example.

Several rows of fins are stacked vertically above each other, and show a certain offset in respect to each other in the position along the circumference of the rows on the outer surface of the building structure.

Wind blowing along the outer surface 2 of the building structure 1 interacts with the fins of the vortex generator. The energy of the airflow close to the outer surface 2 of the building structure 1 is leveled out by the interaction of the air with the fins of the vortex generator.

Thus, the airflow stays a longer distance close to the surface of the building structure before it leaves the surface in the wake of the building structure, and creates a vortex street.

Thus, the creation of vortices in the vortex street is reduced.

Figure 2 shows a detailed view of the vortex generators.

Figure 2 shows a building structure 1 with an outer surface 2. Vortex generators 3 are connected to the outer surface 2 of the building structure 1.

The vortex generator 3 comprises a common base for the fins 5 and 6.

The rows of fins 9 and 10 are oriented mainly vertical along the building structure whereby the vertical direction is determined when the building structure 1 is in an installed position.

The fins 5, 6 of the vortex generator 3 show a tip 7 and a rim 8 that is in communication with the tip 7. The tip 7 of the fin 5, 6 of the vortex generator 3 is the point of the fin with the highest elevation of the fin in respect to the outer surface 2 of the building structure 1. The height of the fin decreases along the rim 8 of the fin 5, 6.

The wind blowing along the outer surface 2 of the building structure 1 interacts with the fins 5, 6. As the direction of the wind varies in respect to the building structure 1, the fins of the vortex generator 3 show a different orientation of the tip 7 of the fin 5, 6 in respect to the wind direction.

The fins 5, 6 are angled in respect to a horizontal direction measured along the outer surface 2 of the building structure 1, whereby a horizontal direction is determined when the building structure 1 is in an installed, and thus upright position.

The fins 5, 6 are angled in respect to a horizontal position in an angle of up to 60 degrees. Seen from the tip 7 of the fin 5, 6, the direction of the fin along the rim 8 can deviate with respect to the horizontal position in a direction of minor 60 degrees or in a direction of plus 60 degrees in respect to the horizontal direction.

Neighboring fins 5, 6 are oriented in an alternating way. Thus, neighboring fins 5, 6 shown an orientation in respect to each other that is V-shaped.

Thus, one end of the fins is closer to the neighboring fin than the other end. Seen in a row of fins, this leads to a zigzag shaped arrangement of the fins.

Different rows 9, 10 of fins 5, 6 are distributed along the circumference of the outer surface 2 of the building structure 1.

Figure 3a shows a flap at a building structure.

Figure 3a shows a flap 11 that is connected to the outer surface 2 of the building structure 1 in addition to the vortex generators. The flap is attached to the building structure 1 at a certain angular position 14 and comprises a height 12.

Figure 3b shows a detailed view of a flap.

Figure 3b shows the flap 11 with a certain height 12, and a base 13 to attach the flap to the outer surface of the building structure 1.

The height of the flap is arranged vertical in respect to the outer surfaces of the building structure 1, whereby the flap has a longitudinal direction that is oriented in parallel to the longitudinal direction of the building structure 1.

Figure 4 shows the effect of a vortex generator and a flap.

Figure 4 shows the building structure 1 in a horizontal crosscut. The building structure shows a circular shape, and can be a chimney or a tower, for example.

The building structure 1 comprises and outer surface 2. A vortex generator 3 is attached to the outer surface 2 at a first position along the circumference of the building structure. A flap 11 is attached to the outer surface 2 at a second position.

In figure 4 the flap 11 and the vortex generator 3 are spaced mainly 180 degrees apart from each other along the circumference.

A wind 15 blows towards the building structure 1. The air stream gets divided at the front side of the building structure 1, and flows in a mainly laminar flow along the outer surface 2 of the building structure in two directions. The air flow at one side meets the vortex generator 3, the air flow at the other side of the building structure 1 meets the flap 11.

The vortex generator influences the airflow in a way that the airstream stays close to the outer surface 2 of the building structure 1 for a longer distance along the circumference as a laminar airflow 16.

The flap interacts with the airflow in a way to force the creation of vortices 17 that separate the laminar airflow from the outer surface 2 of the building structure 1. Behind the flap 11 the vortices 17 are created earlier along the circumference as they would be created without the flap 11. In addition, a different vortex pattern is created.

The combination of a vortex generator 3 and a flap 11 leads to smaller vortices 17, that are offset from the middle of the wake zone of the building structure. The vortex street created is offset to the side of the building structure 1 that comprises the flap 11.

Thus, the vortex street has less influence on the building structure 1. The building structure takes in less loads from the vortices 17 in the wake of the building structure 1. Thus, the building structure can be built less rigid and with less material. Thus material, weight, and costs are saved.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

## Claims

1. Tower (1) of a wind turbine, comprising an outer surface (2), **characterized in that** a vortex generator (3) is connected to the outer surface (2) of the tower (1), that is prepared and arranged in a way to generate vortices in an airstream passing by the outer surface (2).

2. Tower (1) according to claim 1, whereby the vortex generator (3) comprises a plurality of fins (5, 6), that are arranged in a row (9).

3. Tower (1) according to claim 2, whereby the fins (5, 6) comprise a tip (7) with a maximum elevation vertical to the outer surface (2), and a rim (8) adjacent to the tip (7), that comprises a decreasing elevation vertical to the outer surface (2).

4. Tower (1) according to claim 2 or claim 3, whereby the fins (5, 6) are oriented in an angle of up to 60° from the horizontal direction, whereby the horizontal direction is determined when the building structure (1) is in an installed state.

5. Tower (1) according to claim 4, whereby at least two neighboring fins (5, 6) of a row (9) are angled in respect to the horizontal orientation in an alternating way, so that the at least two fins (5, 6) converge at one of their ends.

6. Tower (1) according to one of the claims 2 to 5, whereby the row (9) of the fins (5, 6) is arranged mainly in a vertical direction along the length of the tower (1), whereby the vertical direction of the building structure is determined when the building structure is oriented as installed.

7. Tower (1) according to one of the claims 2 to 6, whereby at least two rows (9, 10) of fins (5, 6) are arranged along the outer surface (2) of the tower (1).

8. Tower (1) according to claim 7, whereby the at least two rows (9, 10) of fins (5, 6) are arranged at a different position along a circumference of the outer surface (2) of the tower (1).

9. Tower (1) according to claim 8, whereby the rows (9, 10) of fins (5, 6) are arranged mainly at positions which are spaced 30°, 60°, 90° or 120° measured along the circumference of the outer surface (2) of the tower (1).

10. Tower (1) according to one of the claims 2 to 9, whereby the row (9) of fins (5, 6) is connected to a common base (4) and the base (4) is connected with the outer surface (2) of the tower (1).

11. Tower (1) according to one of the preceding claims, whereby a section of the upper part of the tower (1) is equipped with vortex generators (3), whereby at least 10% of the length of the tower (1) is equipped with vortex generators (3).

12. Tower (1) according to one of the preceding claims, whereby at least 30% of the length of the tower (1) is equipped with vortex generators (3).

13. Tower (1) according to one of the preceding claims, whereby the outer surface (2) of the tower (1) comprises a flap (11) that is angled mainly vertical to the outer surface (2) and lead along at least a part of the length of the tower (1).
